# EUROPÄISCHE PATENTSCHRIFT

(11) **EP 1 447 206 B1**
(45) Veröffentlichungstag und Bekanntmachung des Hinweises auf die Patenterteilung: **29.12.2010**
(21) Anmeldenummer: 04002274.1
(22) Anmeldetag: 03.02.2004
(51) Int. Cl.: B29C 67/24, B29B 7/76

(54) **Verfahren zur Herstellung von Polyurethan-Formteilen**
Process for manufacturing molded polyurethane parts
Procédé pour la fabrication de pièces moulées en polyuréthane

(30) Priorität: 14.02.2003 DE 10306523
(43) Veröffentlichungstag der Anmeldung: 18.08.2004
(73) Patentinhaber: Hennecke GmbH, 51379 Leverkusen (DE)
(72) Erfinder: Wirth, Jürgen, 51147 Köln (DE); Pawlik, Wolfgang, 50735 Köln (DE); Girnstein, Oliver, 53562 St. Katharinen (DE)
(74) Vertreter: Gosdin, Michael

(56) Entgegenhaltungen:
- EP-A- 0 374 300
- DE-A- 2 814 688
- DE-A- 3 637 896
- US-A- 4 069 948
- US-A- 4 399 104
- US-A- 4 944 599
- US-A- 4 966 466

## Beschreibung

Die Erfindung betrifft ein Verfahren zur Herstellung von Polyurethan-Formteilen, bei dem die Reaktionskomponenten unter Hochdruck in einem Mischkopf vermischt werden, und eine Verfälschung des Mischungsverhältnisses beim Umschalten von Kreislauffahrweise auf Schussbetrieb vermieden wird.

Ein gattungsgemäßer Verfahren ist in der US-A 4 399 104 beschrieben.

Rezirkulations-Mischköpfe arbeiten nur in einem eng begrenzten Leistungsbereich ohne Veränderung des Drucks beim Umschalten von Kreislauffahrweise auf Schussbetrieb.

Insbesondere bei hohen Viskositäten und großen Bereichen der Austragsleistung entstehen Druckunterschiede der strömenden Komponenten zwischen dem Schussbetrieb und dem Kreislaufbetrieb, da die Strömungswiderstände der eingesetzten Bauteile durchsatz- und viskositätsabhängig sind. Zur Zeit müssen diese Druckunterschiede zwischen Kreislaufbetrieb und Schussbetrieb und die damit verbundenen Folgen hingenommen werden.

Vor dem Hintergrund gestiegener Qualitätsanforderungen, wie beispielsweise DIN ISO 9001, werden auch für die Produktionsanlagen, die für die Herstellung von Polyurethanen eingesetzt werden, Prozessfähigkeitsnachweise verlangt. Diese können zur Zeit nicht befriedigend erfüllt werden.

Die Herstellung von Formteilen aus Polyurethan erfolgt mittels einer sogenannten Reaktionsgießmaschine. Dabei werden mindestens zwei miteinander reagierende Reaktivkomponenten (Isocyanat und Polyol) in einem vorgegebenen Mischungsverhältnis über Rohr- und Schlauchleitungen einem Mischkopf zugeführt. Die jeweiligen Volumenströme und damit das Mischungsverhältnis der beiden Reaktivkomponenten werden dabei durch die Dosieraggregate vorgegeben.

Der Mischkopf ist üblicherweise als Rezirkulations-Mischkopf ausgeführt. Das bedeutet, dass die Reaktivkomponenten vor dem eigentlichen Mischvorgang (Schuss oder Schussbetrieb) im Kreislauf über den Mischkopf geführt werden, wobei die Volumenströme sowie die Drücke, die zur Dosierung bzw. zur Vermischung erforderlich sind, bereits während der Rezirkulation exakt eingestellt sind.

Im Mischkopf befinden sich die Mischdüsen sowie die Umschaltorgane, welche die Anlage von Kreislauffahrweise nach Schussbetrieb oder zurück umschalten. Bei Umschalten von Kreislauffahrweise nach Schussbetrieb wird die Rezirkulation der Komponenten unterbrochen und die Komponenten in die Mischkammer und das sich anschließende Auslaufrohr des Mischkopfes und bis in die Form geleitet.

Der Dosiervorgang wird in die beiden Phasen Rezirkulation und Schuss unterteilt.

Beim Umschalten von Rezirkulation (Kreislauffahrweise) in den Schussbetrieb werden die Umschaltorgane, beispielsweise ein Nutenschieber oder je nach eingesetztem Mischkopftyp auch andere geeignete Umschaltorgane, hydraulisch sehr schnell geschaltet, wobei die Volumenströme und Drücke der geförderten Komponenten idealerweise gleich bleiben sollten.

In der Praxis kommt es jedoch insbesondere bei der Vermischung von hochviskosen Komponenten in Hochdruckmischköpfen häufig zu Änderungen des Drucks der Komponenten beim Umschalten von der Kreislauffahrweise in den Schussbetrieb. Das hat zur Folge, dass sich auch die Volumenströme der Komponenten ändern. Dies ist bedingt durch die Elastizität der Schlauchleitungen sowie durch die Kompressibilität der Komponenten. Dieser Vorgang wird auch als "Abatmen" bezeichnet. Eine Änderung der Volumenströme wiederum bewirkt ein falsches Mischungsverhältnis und damit die Produktion von Ausschussformteilen, zumindest von Formteilen minderer Qualität.

Der Druck der Komponenten wird durch den durchsatz- und viskositätsabhängigen Druckverlust der Komponenten bei der Durchströmung der Leitungen und der eingebauten Bauteile, beispielsweise der Druckeinstellorgane wie Düsen oder Drosseln, bestimmt. Der erzeugte Druckverlust der üblichen Druckeinstellorgane ist dabei eine Funktion des Durchsatzes.

Zusätzlich zum Druckverlust, der durch die Durchströmung der Druckeinstellorgane erzeugt wird, wirken in der Rezirkulationsphase weitere Strömungswiderstände, die einen zusätzlichen Druckverlust erzeugen. Dies sind im wesentlichen die Strömungswiderstände, die durch die Rücklaufleitung (Zirkulationsleitung) erzeugt werden oder die beim Durchströmen von Kanälen der Umschaltorgane (Kreislaufnuten) entstehen. Auch diese Strömungswiderstände sind eine Funktion des Durchsatzes.

Während der Rezirkulation treten somit andere Strömungswiderstände auf als während des Schussbetriebs, da während der Rezirkulation teilweise andere Leitungen und Bauteile, wie beispielsweise die Kreislaufnuten und die Rücklaufleitungen, durchströmt werden als während des Schussbetriebs.

Daher kommt es beim Umschalten von der Kreislauffahrweise in den Schussbetrieb zu Druckänderungen. Diese treten insbesondere bei hohen Komponentenviskositäten und bei großen Bereichen der Austragsleistungen auf, da die Strömungswiderstände viskositäts- und durchsatzabhängig sind. Dadurch kommt es dann zu Änderungen der Volumenströme und damit zur Änderung des Mischungsverhältnisses der Komponenten, welche die Qualität des Formteils bis zum Ausschuss verschlechtern kann.

Die Aufgabe der vorliegenden Erfindung bestand daher darin, ein Verfahren zur Herstellung von Polyurethan-Formteilen zur Verfügung zu stellen, bei dem beim Umschalten von Kreislauffahrweise auf Schussbetrieb eine Verfälschung des Mischungsverhältnisses vermieden werden kann.

Die Erfindung betrifft ein Verfahren zur Herstellung von Polyurethan-Formteilen, bei dem mindestens eine Isocyanat- und mindestens eine Polyolkomponente im Schussbetrieb mit vorgegebenen Volumenströmen *V̇* _{s/Iso} für das Isocyanat und *V̇* _{s/Polyol} für das Polyol und vorgegebenen Drücken p_{s/Iso} für das Isocyanat und P_{s/Polyol} für das Polyol für eine vorgegebene Zeitspanne Δt in eine Mischkammer (13) gefördert werden, in der Mischkammer (13) vermischt werden und das Polyurethan-Reaktionsgemisch anschließend in eine Form ausgetragen wird und bei dem die Komponenten vor dem Schussbetrieb durch Zirkulationsleitungen (3) zwischen dem Mischkopf und den jeweils zugeordneten Komponentenbehältern (4) im Kreislauf gefördert werden, wobei die Drücke der Komponenten mittels Drucksensoren (10) gemessen und über Impulsleitungen einer Steuereinrichtung (12) übermittelt werden und dass während des Umschaltens von Kreislauffahrweise auf Schussbetrieb die vorgegebenen Volumenströmen *V̇* _{s/Iso} und *V̇* _{s/Polyol} der Komponenten für den Schussbetrieb eingestellt werden, wobei die Einstellung der Volumenströme der Komponenten durch die Einstellung der Antriebe (11) der Dosierorgane (6) durch die Steuereinrichtung (12) erfolgt, dadurch gekennzeichnet dass während der Förderung im Kreislauf die Volumenströme der Komponenten so eingestellt werden, dass die Drücke der Komponenten im Kreislauf den vorgegebenen Drücken p_{s/Iso} bzw. p_{s/Polyol} der Komponenten für den Schussbetrieb entsprechen.

Bei dem erfindungsgemäßen Verfahren wird also nicht mehr versucht, den Druck und den Dosiervolumenstrom während der Rezirkulationsphase auf die Werte einzustellen, die den Werten im Schussbetrieb entsprechen. Vielmehr wird der Volumenstrom in der Rezirkulationsphase so eingestellt, dass der während der Rezirkulation resultierende Druck dem Druck entspricht, der für den Schussbetrieb gefordert ist. Der Dosiervolumenstrom wird erst dann eingestellt, wenn die Umschaltorgane von Kreislauffahrweise in Schussbetrieb umschalten.

Diese Vorgehensweise wird dadurch möglich, dass die Einstellung des Volumenstroms der Dosierorgane in der Zeit erfolgt, in der die Umschaltorgane von Kreislauffahrweise in den Schussbetrieb umschalten. Zu diesem Zweck wird der Antrieb des Dosierorgans von einer Steuereinrichtung geregelt und zwar durch die eingehenden Analogwerte der Drucksensoren und des Volumenstromzählers, sowie einer Zustandsmeldung der Umschaltorgane

Die Steuereinrichtung benötigt dazu eine Reihe von Informationen:
- Zunächst wird die Maschine eingerichtet. Das bedeutet, dass in der Kreislauffahrweise die Kennlinien für den Druck und den Massen- oder Volumenstrom in Abhängigkeit von der Pumpendrehzahl aufgenommen und in der Steuereinrichtung hinterlegt werden.
- Mit dem ersten Schuss werden die Schussdrücke p_{s/Iso} und p_{s/Polyol} für einen festen Massen- oder Volumenstrom im Schussbetrieb ermittelt und ebenfalls in der Steuerung hinterlegt.
- Soll ein weiterer Schuss unter den gleichen Bedingungen durchgeführt werden, so stellt die Steuereinrichtung in der Kreislauffahrweise eine Förderleistung der Dosierorgane (beispielsweise . Pumpendrehzahlen) ein, die den hinterlegten . Schussdrücken p_{s/Iso} und p_{s/Polyol} entspricht.
- Im Moment des Umschaltens von der Kreislauffahrweise in den Schussbetrieb wird dann die Förderleistung eingestellt (beispielsweise durch Verstellung der Pumpendrehzahl), die der geforderten Dosierleistung für den Schussbetrieb entspricht.

In einer speziellen Ausführungsform der Erfindung werden einzelne Wertepaare von Schussdaten (also jeweils einzustellende Förderleistung in der Kreislauffahrweise und Schussdrücke p_{s/Iso} und p_{s/Polyol} ) zu einer dynamischen Kennlinie interpoliert. Damit verfügt dann die Anlagensteuerung über Daten für Druckeinstellungen, die als Schuss noch nicht ausgeführt wurden.

Die Erfindung wird im folgenden anhand der Figuren näher erläutert.
Figur 1 zeigt eine Anlage zur Herstellung von Polyurethan-Formteilen im Rezirkulationsbetrieb.
Figur 2 zeigt eine Anlage zur Herstellung von Polyurethan-Formteilen im Schussbetrieb.
Figur 3 zeigt je einen Druck- und Volumenstromverlauf in Abhängigkeit von der Zeit nach dem Verfahren nach dem Stand der Technik.
Figur 4 zeigt den Verlauf von Druck und Volumenstrom nach dem erfindungsgemäßen Verfahren.

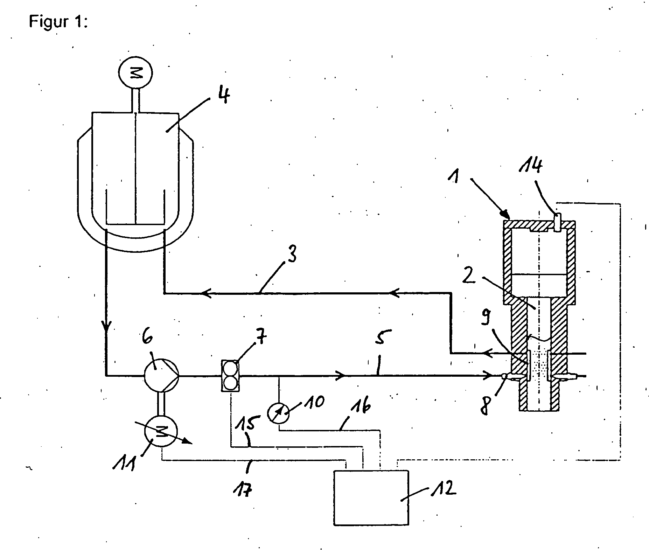

Figur 1 zeigt beispielhaft eine Anlage für den Einsatz in dem erfindungsgemäßen Verfahren enthaltend einen Gegenstrominjektionsmischkopf 1, dessen Umschaltorgan 2 als Nutenschieber oder Steuerschieber ausgebildet ist. Die Komponente (Isocyanat oder Polyol) wird dabei im Kreislauf durch Zirkulationsleitung 3, Komponentenbehälter 4, Leitung 5, Dosierpumpe 6, Volumenstrommesser 7, Düse 8 und Kreislaufnut 9 gefördert. Die andere Komponente wird in analoger Weise gefördert (nicht dargestellt). Die Druckmessung erfolgt durch Drucksensor 10, der über eine Impulsleitung 16 mit der Steuereinrichtung 12 verbunden ist. Die Dosierpumpe 6 wird von einem Motor 11 angetrieben, der ebenfalls über eine Impulsleitung 17 mit der Steuereinrichtung 12 verbunden ist. Der Volumenstrommesser 7 ist ebenfalls mit der Steuereinrichtung 12 über eine Impulsleitung 15 verbunden.

Der Näherungschalter 14 ist ebenfalls mit der Steuereinrichtung 2 über eine Impulsleitung verbunden und meldet an die Steuereinrichtung 2 die aktuelle Position des Näherungsschalter 14. Die Position des Näherungssschalters ist dabei ein Indiz dafür, ob die Anlage in Kreislauffahrweise oder im Schussbetrieb ist.

Der Dosiervorgang wird in die beiden Phasen Rezirkulation und Schuss unterteilt.

Beim Umschalten von Rezirkulation (Kreislauffahrweise) in den Schussbetrieb wird das Umschaltorgan 2 (Nutenschieber) hydraulisch sehr schnell umgeschaltet.

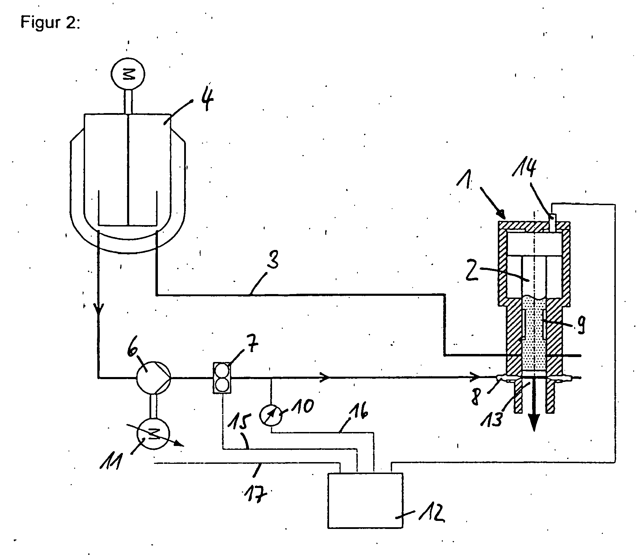

Figur 2 zeigt die gleiche Anlage im Schussbetrieb. Der Steuerschieber (Umschaltorgan 2) blockiert die Rückströmung in die Zirkulationsleitung 3. Die Komponente wird daher durch die Düse 8 in die Mischkammer 13 gefördert und dort mit der zweiten Komponente vermischt.

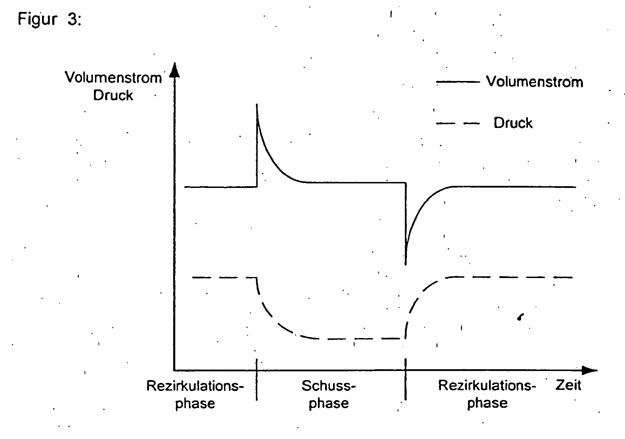

Figur 3 zeigt je einen Druck- und Volumenstromverlauf in Abhängigkeit von der Zeit nach dem Verfahren nach dem Stand der Technik. Es zeigt sich eine starke Veränderung des Drucks beim Umschalten von der Kreislauffahrweise in den Schussbetrieb. Durch das "Abatmen" des Drucksystems ändert sich der Volumenstrom über der Schusszeit.

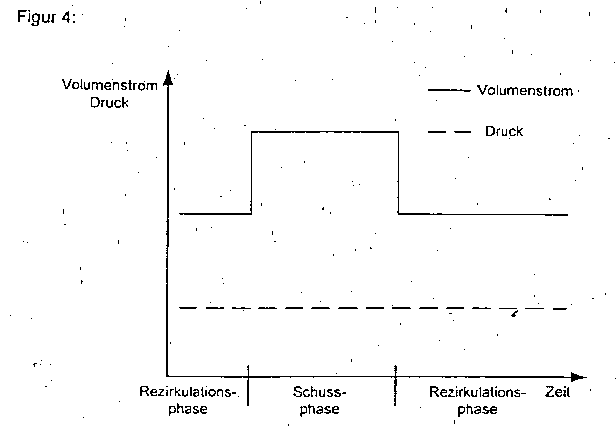

Figur 4 zeigt den Verlauf von Druck- und Volumenstrom nach dem erfindungsgemäßen Verfahren. Dabei ist der Druckverlauf während der gesamten Rezirkulations- und Schussphase konstant. Der Volumenstrom ist während der gesamten Schusszeit konstant.

## Patentansprüche

1. Verfahren zur Herstellung von Polyurethan-Formteilen, bei dem mindestens eine Isocyanat- und mindestens eine Polyolkomponente im Schussbetrieb mit vorgegebenen Volumenströmen *V̇*_{s/Iso} für das Isocyanat und *V̇* _{s/Polyol} für das Polyol und vorgegebenen Drücken p_{s/Iso} für das Isocyanat und p_{s/Polyol} für das Polyol für eine vorgegebene Zeitspanne Δt in eine Mischkammer (13) gefördert werden, in der Mischkammer (13) vermischt werden und das Polyurethan-Reaktionsgemisch anschließend in eine Form ausgetragen wird und bei dem die Komponenten vor dem Schussbetrieb durch Zirkulationsleitungen (3) zwischen dem Mischkopf und den jeweils zugeordneten Komponentenbehältern (4) im Kreislauf gefördert werden, wobei die Drücke der Komponenten mittels Drucksensoren (10) gemessen und über Impulsleitungen einer Steuereinrichtung (12) übermittelt werden und dass während des Umschaltens von Kreislauffahrweise auf Schussbetrieb die vorgegebenen Volumenströme *V̇* _{s/Iso} und *V̇* _{s/Polyol} der Komponenten für den Schussbetrieb eingestellt werden, wobei die Einstellung der Volumenströme der Komponenten durch die Einstellung der Antriebe (11) der Dosierorgane (6) durch die Steuereinrichtung (12) erfolgt, **dadurch gekennzeichnet, dass** während der Förderung im Kreislauf die Volumenströme der Komponenten so eingestellt werden, dass die Drücke der Komponenten im Kreislauf den vorgegebenen Drücken p_{s/Iso} bzw. p_{s/Polyol} der Komponenten für den Schussbetrieb entsprechen.

2. Verfahren nach Anspruch 1, **dadurch gekennzeichnet, dass** neben der mindestens einen Polyol- und Isocyanatkomponente noch weitere Komponenten, Additive oder Farben eingesetzt werden.

3. Verfahren nach einem der Ansprüche 1 oder 2, bei dem die Drücke der Komponenten sowohl während des Rezirkulations- als auch während des Schussbetriebes in einem Bereich von 3 bis 600 bar, vorzugsweise von 50 bis 350 bar, besonders bevorzugt von 100 bis 250 bar liegen.

4. Verfahren nach einem der Ansprüche 1 bis 3, bei dem die Volumenströme der Komponenten permanent durch Volumenstrommesser (7) erfasst und mittels Impulsleitungen der Steuerung (12) signalisiert werden und dass eine während eines Schusses auftretende Toleranzüberschreitung ermittelt und für die nachfolgenden Schüsse korrigiert wird.

## Claims

1. Process for the production of polyurethane mouldings, in which at least one isocyanate component and at least one polyol component are delivered in shot operation with predetermined volumetric flow-rates *V̇* _{s/Iso} for the isocyanate and *V* _{s/Polyol} for the polyol with predetermined pressures p_{s/Iso} for the isocyanate and p_{s/Polyol} for the polyol for a predetermined time-interval At into a mixing chamber (13), are mixed in the mixing chamber (13) and the polyurethane reaction mixture is then discharged into a mould and in which the components prior to the shot operation are conveyed in circuit through circulation lines (3) between the mixing head and the respectively assigned component containers (4), wherein the pressures of the components are measured by means of pressure sensors (10) and are transmitted via pulse lines to a control device (12) and wherein during the change over from circulatory mode of operation to shot operation the predetermined volumetric flow-rates *V* _{s/Iso} and *V* _{s/Polyol} of the components for the shot operation are adjusted, wherein the adjustment of the volumetric flow-rates of the components is effected by the adjustment of the drive units (11) of the metering element (6) by the control device (12),
**characterized in that**
during conveying in circuit the volumetric flow-rates of the components are adjusted in such a way that the pressures of the components in circuit correspond to the predetermined pressures p_{s/Iso} and p_{s/Polyol} respectively of the components for the shot operation.

2. Process according to Claim 1, **characterized in that** beside the at least one polyol component and isocyanate component further components, additives or dyes are employed.

3. Process according to one of Claims 1 or 2, in which the pressures of the components both during recirculation operation and during shot operation lie within a range from 3 to 600 bar, preferably from 50 to 350 bar, especially preferred from 100 to 250 bar.

4. Process according to one of Claims 1 to 3, in which the volumetric flow-rates of the components are registered permanently by volumetric-flow meters (7) and are signalled to the control device (12) by means of pulse lines and that an exceeding of the set tolerance which arises during a shot is ascertained and corrected for subsequent shots.

## Revendications

1. Procédé de fabrication de pièces moulées en polyuréthanne, selon lequel, en mode de coulée, au moins un composant isocyanate et au moins un composant polyol sont transportés dans une chambre de mélange (13) avec des débits volumiques fixés *V̇*_{*s*/}*ᵢₛₒ* pour l'isocyanate et *V̇*_{*s*/}*_{polyol}* pour le polyol et des pressions fixées *p*_{*s*/*iso*} pour l'isocyanate et *p*_{*s*/*polyol*} pour le polyol pendant une période Δ*t* fixée, mélangés dans la chambre de mélange (13) et le mélange réactionnel de polyuréthanne est ensuite déchargé dans un moule, et selon lequel les composants sont mis en circulation avant le mode de coulée par des conduites de circulation (3) entre la tête de mélange et les contenants des composants (4) respectivement attribués, les pressions des composants étant mesurées par des capteurs de pression (10) et transmises par des câbles de commande d'un dispositif de commande (12), et les débits volumiques fixés *V̇*_{*s*/*iso*} et *V̇*_{*s*/*polyol*} des composants étant ajustés pour le mode de coulée pendant le passage du mode de circulation au mode de coulée, l'ajustement des débits volumiques des composants ayant lieu par ajustement des actionnements (11) des appareils de dosage (6) par le dispositif de commande (12), **caractérisé en ce que**, pendant la mise en circulation, les débits volumiques des composants sont ajustés de manière à ce que les pressions des composants dans le circuit correspondent aux pressions fixées *p*_{*s*/}*ᵢₛₒ* et *p*_{*s*/*polyol*} des composants pour le mode de coulée.

2. Procédé selon la revendication 1, **caractérisé en ce que** des composants, additifs ou colorants supplémentaires sont utilisés en plus du ou des composants polyol et isocyanate.

3. Procédé selon l'une quelconque des revendications 1 ou 2, selon lequel les pressions des composants se situent dans une plage allant de 3 à 600 bar, de préférence de 50 à 350 bar, de manière particulièrement préférée de 100 à 250 bar, aussi bien en mode de recirculation qu'en mode de coulée.

4. Procédé selon l'une quelconque des revendications 1 à 3, selon lequel les débits volumiques des composants sont enregistrés en permanence par un dispositif de mesure du débit volumique (7) et signalés par des câbles de commande du dispositif de commande (12), et selon lequel un dépassement de la tolérance se produisant pendant une coulée est calculé et corrigé pour les coulées suivantes.
